**Europäisches Patentamt**

**European Patent Office**

**Office européen des brevets**

(19)

(11) **EP 1 514 953 A2**

(12) **EUROPÄISCHE PATENTANMELDUNG**

(43) Veröffentlichungstag:
**16.03.2005 Patentblatt 2005/11**

(51) Int Cl.7: **C23C 28/00**, C23C 28/04,
C23C 4/02

(21) Anmeldenummer: 04106398.3

(22) Anmeldetag: **06.02.2001**

(84) Benannte Vertragsstaaten:
**AT BE CH CY DE DK ES FI FR GB GR IE IT LI LU
MC NL PT SE TR**

(30) Priorität: **25.02.2000 DE 10008861**

(62) Dokumentnummer(n) der früheren Anmeldung(en)
nach Art. 76 EPÜ:
**01903700.1 / 1 257 686**

(71) Anmelder: **FORSCHUNGSZENTRUM JÜLICH
GMBH
52425 Jülich (DE)**

(72) Erfinder:
• **Dietrich, Markus
D-63486 Bruchköbel (DE)**

• **Vassen, Robert
52134 Herzogenrath (DE)**
• **Cao, Xueqiang c/o Key Lab of Rare Earth
Renmin Street 159 130022 Changchun,Jilin (CN)**
• **Stöver, Detlev
82382 Niederzier (DE)**

(74) Vertreter: **Gille Hrabal Struck Neidlein Prop Roos
Patentanwälte,
Brucknerstrasse 20
40593 Düsseldorf (DE)**

Bemerkungen:
Diese Anmeldung ist am 08 - 12 - 2004 als
Teilanmeldung zu der unter INID-Kode 62
erwähnten Anmeldung eingereicht worden.

(54) **Kombinierte Wärmedämmschichtsysteme**

(57)    Die Erfindung betrifft ein Bauteil mit einer Wärmedämmschicht auf seiner Oberfläche. Die Wärmedämmschicht umfasst einen unteren und einen oberen Bereich. Der untere Bereich befindet sich zwischen dem Bauteil und dem oberen Bereich. Der untere Bereich besteht ganz oder überwiegend aus YSZ oder einem Glas-Metall-Kompositwerkstoff.

Der obere Bereich besteht ganz oder überwiegend aus einem Werkstoff, der eine stabile Phase bei Temperaturen deutlich über 1200 °C zeigt.

Das Bauteil kann bei Temperaturen deutlich über 1200 °C verwendet werden.

**Beschreibung**

Die Erfindung betrifft ein Bauteil mit einer Wärmedämmschicht, welches bei hohen Temperaturen eingesetzt werden kann. Ein bekanntes Beispiel für ein solche Bauteile stellen Teile einer Gasturbine dar.

Zur Erhöhung des Wirkungsgrades stationärer und fliegender Gasturbinen werden heute immer höhere Gastemperaturen in den zugehörigen Maschinen angestrebt. Hierzu werden Bauteile der Turbinen mit Wärmedämmschichten versehen, die in der Regel aus mit $Y_2O_3$ teilstabilisiertem Zirkonoxid (YSZ) bestehen. Eine Haftvermittlerschicht aus einer MCrAlY-Legierung (M = Fe, Co, Ni) zwischen dem Substrat und der Wärmedämmschicht dient hauptsächlich dem Oxidationsschutz des Substrates sowie der besseren Haftung der durch thermisches Spritzen auf das Substrat aufgebrachten YSZ-Keramikschicht. Alternativ kann auch eine Aluminidschicht als Haftvermittlerschicht verwendet werden. Diese kann durch Aluminiumdiffusion in die Substratoberfläche erzeugt werden.

Mit Wärmedämmschicht-Systemen können heute für lange Betriebszeiten Oberflächentemperaturen der Turbinenbauelemente bis zu 1200°C realisiert werden. Eine weitere Erhöhung auf über 1300°C wird angestrebt, ist jedoch mit den gängigen Wärmedämmschicht-Systemen nicht realisierbar. Aus diesem Grund wird weltweit nach neuen Lösungen gesucht, die das teilstabilisierte Zirkonoxid ablösen könnten.

Aufgabe der Erfindung ist die Schaffung einer Wärmedämmschicht, die für den Einsatz bei Temperaturen oberhalb von 1200 °C geeignet ist.

Die Aufgabe der Erfindung wird durch eine Wärmedämmschicht gelöst, die die Merkmale des ersten Anspruchs aufweist. Vorteilhafte Ausgestaltungen ergeben sich aus den Unteransprüchen.

Das anspruchgemäße Bauteil weist an seiner Oberfläche eine Wärmedämmschicht auf. Die Wärmedämmschicht umfasst einen unteren und einen oberen Bereich. Der untere Bereich befindet sich zwischen dem eigentlichen Bauteil und dem oberen Bereich. Der untere Bereich besteht ganz oder überwiegend aus stabilisiertem $ZrO_2$ oder einem Glas-Metall-Kompositwerkstoff. Der obere Bereich besteht ganz oder überwiegend aus einem Werkstoff, der eine stabile Phase bei Temperaturen von 0°C bis wenigstens 1200°C aufweist. Eine stabile Phase im Sinne der Erfindung liegt vor, wenn im angegebenen Temperaturintervall keine Phasenumwandlung stattfindet, die mit einer sprunghaften Änderung des thermischen Ausdehnungskoeffizienten gekoppelt ist.

Der untere Bereich weist insbesondere einen größeren thermischen Ausdehnungskoeffizienten als der obere Bereich auf. Es hat sich gezeigt, dass dann in der Praxis stabile Wärmedämmschichten hergestellt werden können.

In einer verbesserten Ausführungsform der Erfindung befindet sich die Wärmedämmschicht auf einer Haftvermittlerschicht.

Der untere Bereich wird beispielsweise durch eine Schicht gebildet, die im folgenden Kontaktschicht genannt wird. Sie besteht aus YSZ oder aus Glas-Keramik-Kompositwerkstoffen

Es hat sich gezeigt, dass Rauhigkeiten der Oberfläche, auf die eine Wärmedämmschicht aufgebracht ist, mechanische Spannungen in der Wärmedämmschicht verursachen. Regelmäßig sind diese mechanischen Spannungen maßgeblich für auftretende Defekte in der Wärmedämmschicht verantwortlich. Bei der Wahl des Materials der Kontaktschicht ist daher bevorzugt auf einen großen thermischen Ausdehnungskoeffizienten zu achten, da mechanische Spannungen gering gehalten werden. Der thermische Ausdehnungskoeffizient der Wärmedämmschicht sollte wenigstens im unteren Bereich wenigstens $10*10^{-6}$ $K^{-1}$ betragen, um das Auftreten von geringen mechanischen Spannungen zu erreichen.

Die Kontaktschicht ist insbesondere wenigstens 50 µm, bevorzugt wenigstens 100 µm dick, um die vorgenannte gewünschte Wirkung zu erzielen.

Damit die Kontaktschicht nicht zu hohen Temperaturen ausgesetzt ist, befindet sich über dem unteren Bereich der obere Bereich mit der geringen Wärmeleitfähigkeit. Die Dicke dieses Bereichs ist so dick zu wählen, dass der untere Bereich hinreichend gegenüber der Temperatur geschützt wird.

Der obere Bereich kann ebenfalls in Form einer Schicht vorliegen, die im folgenden Deckschicht genannt wird.

Als Material für die Deckschicht bzw. den oberen Bereich kommen prinzipiell alle Werkstoffe in Frage, die vor allem die Kriterien der Phasenstabilität und der niedrigen Wärmeleitfähigkeit erfüllen. Beispiele hierfür sind vollstabilisiertes kubisches Zirkonoxid, Oxide mit Perowskitstruktur oder Pyrochlorstruktur wie z.B. $La_2Zr_2O_7$ oder $Nd_2Hf_2O_7$ oder auch dotierte Varianten dieser Werkstoffe. Die beispielhaft genannten Werkstoffe weisen die gewünschte niedrige Wärmeleitfähigkeit sowie die gewünschte stabile Phase bei der angestrebten Betriebstemperatur von über 1200 °C auf.

Die Schichten können durch verschiedene Verfahren aufgebracht werden, wie zum Beispiel LPPS (Low pressure plasma spraying), APS (Air plasma spraying) und EB-PVD (Elektron beam physical vapor deposition). Andere Verfahren sind jedoch grundsätzlich ebenfalls möglich.

Bei der Auswahl der Werkstoffe ist besonderes auch auf Thermozyklierbarkeit zu achten. Darunter wird die Beständigkeit gegenüber extremer zyklischer Temperaturwechselbeanspruchung verstanden. Ein frühzeitiges Versagen beim Thermozyklieren tritt in Schichtsystemen häufig aufgrund der unterschiedlichen thermischen Ausdehnungskoeffizienten der verschiedenen Werkstoffe auf. Beim Aufheizen und Abkühlen der Schichten entstehen thermische Spannungen, die zur Schädigung und zum Versagen des Gefüges führen können. Der thermische Ausdehnungskoeffizient erreicht bei den verwendeten Substratwerkstoffen und der Haftvermittlerschicht mit ca. 14 * 10$^{-6}$ K$^{-1}$ einen für keramische Systeme hohen Wert. Das gängige Wärmedämmschicht-Material YSZ weist einen thermischen Ausdehnungskoeffizienten von 10,4*10$^{-6}$ K$^{-1}$ auf. Als Substratwerkstoff wird der Werkstoff bezeichnet, auf den die Wärmedämmschicht gegebenenfalls inklusive der Haftvermittlerschicht aufgebracht wird.

Bei gleicher Wärmeleitfähigkeit der Wärmedämmschicht und gleicher Schichtdicke führen höhere Oberflächentemperaturen auch zu höheren Temperaturen an der Grenzfläche zur Haftvermittlerschicht und dem Substratwerkstoff. Auch diese Temperatursteigerung führt in den aktuellen Wärmedämmschicht-Systemen zur Schädigung des Verbundes. Beim erfindungsgemäßen Wärmedämmschicht-System ist deshalb auf eine geringe Wärmeleitfähigkeit sowohl im unteren als auch im oberen Bereich geachtet worden. Je höher die Wärmeleitfähigkeit des oberen Bereichs ist, desto dikker muss der Bereich sein. Da auch das Material des unteren Bereichs (Kontaktschicht) nur begrenzte thermische Stabilität aufweisen kann, muss die gute Wärmedämmung besonders für den oberen Bereich (Deckschicht) gelten.

Das gemäß Stand der Technik eingesetzte YSZ unterliegt bei Temperaturen über 1200°C einer Phasenumwandlung, die zur Schädigung der Schicht führen kann. Diese Problem ist erfindungsgemäß durch Vorsehen des oberen Bereichs gelöst worden. Bei dem Werkstoff ist daher auf Phasenstabilität bis zu den gewünschten Einsatztemperaturen, möglichst sogar bis zum Schmelzpunkt zu achten.

Bisher wurde noch kein Werkstoff gefunden, der sämtlich gewünschten Eigenschaften in ausreichendem Maße miteinander verbindet. Einige Materialien erfüllen jedoch eine oder zwei der Voraussetzungen. Die Erfindung beruht daher auf dem Gedanken, verschiedene keramische Materialien in einem Schichtsystem zu kombinieren. Hierbei weist das Material in Kontakt zur Haftvermittlerschicht einen thermischen Ausdehnungskoeffizienten und eine Schadenstoleranz auf, die die Thermozyklierbarkeit gewährleistet, während das Material an der Oberfläche der Schicht die nötigen Eigenschaften wie z.B. Phasenstabilität aufweist, um Temperaturen über 1200°C zu widerstehen.

Die erfindungsgemäße Idee wird wie folgt umgesetzt:

1) Mehrschichtiges System (Multilayer)

Eine Wärmedämmschicht besteht aus einer Kontaktschicht und einer Deckschicht. Die Kontaktschicht befindet sich zwischen der Haftvermittlerschicht und der Deckschicht.

2) Gradierte Schicht

Eine Wärmedämmschicht weist einen Konzentrationsgradienten auf. Das Verhältnis zweier Werkstoffe verändert sich innerhalb der Wärmedämmschicht kontinuierlich.

Kombinationen von 1) und 2) sind möglich.

Ausführungsbeispiele:

1. Wärmedämmschicht aus YSZ und La$_2$Zr$_2$O$_7$.

Zum Plasmaspritzen geeignete YSZ-Pulver und MCrAlY-Pulver (Haftvermittlerschicht) sind industriell verfügbar. Das La$_2$Zr$_2$O$_7$-Pulver wird über Sprühtrocknung einer wässrigen La(NO$_3$)$_3$- und Zr(NO$_3$)$_2$- Lösung mit anschließendem Kalzinieren bei 1400°C hergestellt. Schließlich wird mittels LPPS die Haftvermittlerschicht auf den Substratwerkstoff, der aus einer Nickel-Basislegierung besteht, aufgebracht. Anschließend wird mittels EB-PVD zuerst eine 0,05 - 0,2 mm dicke YSZ-Schicht als Kontaktschicht auf die Haftvermittlerschicht aufgebracht. Anschließend wird mittels EB-PVD eine Pyrochlorschicht als Deckschicht mit einer Dicke von wenigstens 0,1 mm aufgebracht.

2. Gradierte Wärmedämmschicht aus Glas-Metall-Komposit und kubischem Zirkonoxid

Kubisches Zirkonoxidpulver und ein Haftvermittlerschicht-Pulver sind industriell verfügbar. Durch Vermischen und Vermahlen von feinstem Glaspulver mit Haftvermittlerschicht-Pulver wird das Pulver des Glas-Metall-Komposits hergestellt.

Zuerst wird die Haftvermittlerschicht mittels LPPS aufgebracht.

Beim Plasmaspritzen der gradierten Wärmedämmschicht werden das Glas-Metall-Pulver und das ZrO$_2$-Pulver der Plasmakanone über verschiedene Fördereinheiten zugeführt, wobei am Anfang hauptsächlich Glas-Metall-Pulver zugeführt wird. Im Laufe des Spritzvorganges wird dessen Anteil kontinuierlich reduziert, während die Fördermenge des kubischen Zirkonoxids im gleichen Maße erhöht wird.

Die gradierte Wärmedämmschicht wird so mit einer Dicke von insgesamt ca. 0,3 mm hergestellt.

3. Kombination aus Multilayer und gradierter Schicht bestehend aus YSZ und Tantal dotiertem YSZ (Ta-YSZ)

Zum Plasmaspritzen geeignete YSZ-Pulver und MCrAlY-Pulver (Haftvermittlerschicht-Pulver) sind industriell verfügbar.

Es wird TA-YSZ über eine Festkörperreaktion gemäß

$$Ta_2O_5 + YSZ \rightarrow YSZ*Ta_2O_5$$

hergestellt. Die Ausgangspulver werden in einer Kugelmühle unter Ethanol gemahlen und anschließend bei 1400°C geglüht. Im Anschluss an die bei 1400°C ablaufende Reaktion wird über Sprühtrocknung ein fließfähiges Pulver erzeugt.

Nach Aufbringen der Haftvermittlerschicht auf das Substrat wird zuerst eine YSZ-Schicht gespritzt. Die Dicke beträgt ca. 0,05 bis 0,1 mm. Anschließend wird hierauf eine gradierte Schicht wie in 2) beschrieben bestehend aus YSZ und Ta-YSZ mit einer Dicke von wenigstens 0,1 mm aufgetragen. Schließlich folgt eine Deckschicht aus reinem Ta-YSZ mit einer Dicke von 0,05 - 0,1 mm. Alle drei Lagen werden mittels APS aufgebracht.

**Patentansprüche**

1. Bauteil mit einer Wärmedämmschicht auf seiner Oberfläche,
   **dadurch gekennzeichnet, dass**

   - die Wärmedämmschicht einen unteren und einen oberen Bereich umfasst,
   - der untere Bereich sich zwischen dem Bauteil und dem oberen Bereich befindet,
   - der untere Bereich ganz oder überwiegend aus YSZ oder einem Glas-Metall-Kompositwerkstoff besteht,
   - der obere Bereich ganz oder überwiegend aus einem Werkstoff besteht, der eine stabile Phase bei Temperaturen von 0°C bis wenigstens 1200°C zeigt.

2. Bauteil nach Anspruch 1, bei dem der thermische Ausdehnungskoeffizient im unteren Bereich größer ist als der thermische Ausdehnungskoeffizient im oberen Bereich.

3. Bauteil nach Anspruch 1 oder 2, bei dem sich die Wärmedämmschicht auf einer Haftvermittlerschicht befindet.

4. Bauteil nach einem der vorhergehenden Ansprüche, bei dem der untere Bereich durch eine Schicht gebildet ist, die aus YSZ oder aus Glas-Metall-Kompositwerkstoffen besteht.

5. Bauteil nach einem der vorhergehenden Ansprüche, bei dem der untere Bereich durch eine Schicht gebildet ist, die wenigstens 50 µm, bevorzugt wenigstens 100 µm dick ist.

6. Bauteil nach einem der vorhergehenden Ansprüche, bei dem der obere Bereich durch eine Schicht gebildet ist.

7. Bauteil nach einem der vorhergehenden Ansprüche, bei dem der obere Bereich zumindest überwiegend aus vollstabilisiertem, kubischem Zirkonoxid, aus Oxiden mit Perowskit- oder Pyrochlorstruktur wie z.B. $La_2Zr_2O_7$ oder $Nd_2Hf_2O_7$ oder dotierten Varianten dieser Werkstoffe besteht.

8. Bauteil nach einem der vorhergehenden Ansprüche, bei dem die Wärmedämmschicht durch eine gradierte Schicht gebildet ist.

9. Bauteil nach einem der vorhergehenden Ansprüche, bei dem der obere Bereich wenigstens 0,1 mm dick ist.

10. Bauteil nach einem der vorhergehenden Ansprüche, bei dem der obere Bereich ganz oder überwiegend aus einem Werkstoff besteht, der eine stabile Phase bei Temperaturen bis wenigstens 1300°C zeigt.

11. Bauteil nach einem der vorhergehenden Ansprüche, bei dem die Wärmedämmung, die durch den oberen Bereich bewirkt wird, größer ist als die Wärmedämmung, die durch den unteren Bereich bewirkt wird.

12. Verwendung eines Bauteils nach einem der vorhergehenden Ansprüche bei Temperaturen oberhalb von 1200°C.